# EUROPEAN PATENT SPECIFICATION

(11) **EP 0 547 585 B1**
(45) Date of publication and mention of the grant of the patent: **15.05.1996**
(21) Application number: 92121407.8
(22) Date of filing: 16.12.1992
(51) Int. Cl.: B60K 15/067

(54) **Means for attaching a tank to the body shell of a vehicle**
Mittel zum Befestigen eines Kraftstoffbehälters an die Karosserie eines Fahrzeuges
Dispositif pour fixer un réservoir d'essence à la carosserie d'un véhicule

(30) Priority: 17.12.1991 IT TO910991
(43) Date of publication of application: 23.06.1993
(73) Proprietor: FIAT AUTO S.p.A., I-10135 Torino (IT)
(72) Inventor: Cornacchia, Giorgio, I-10100 Torino (IT)
(74) Representative: Plebani, Rinaldo

(56) References cited:
- EP-A- 0 065 647
- DE-C- 3 733 503
- GB-A- 2 160 834
- US-A- 4 411 441
- US-A- 4 469 340

## Description

This invention relates to means for the attachment of a tank to the body shell of a vehicle as specified in the preamble of Claim 1. Such attachment means are generally known.

Means for the attachment of a tank to the body shell of a vehicle which use corresponding metal brackets integrally attached to the vehicle's body shell and provided with through holes in line with which corresponding projecting nuts are welded to receive corresponding fixing bolts are currently known in the state of the art. The tank, which is normally constructed of a plastics material, is in turn provided with corresponding flat fins which match the metal brackets on the body shell and are provided with through holes corresponding to the holes in the metal brackets.

Flexible metal strips, which are attached to the bolts housed in the holes made in the fins, which enclose the body of the tank on the underside, are also used to attach a tank to the body shell.

Being attached below the body shell of the vehicle, the tank and the attachment system are exposed to the effects of water and whatever else lies on the roadway and is thrown up by the wheels of the vehicle when it is in motion, such as e.g. salt spread on the roads during winter months to melt snow and ice. After the vehicle has been in use for a certain period of time this results in rusting or corrosion of the metal parts exposed to these agencies, such as e.g. the fixing bolts, giving rise to difficulties in the dismantling of the tank for maintenance work or during final breaking for recovery of the vehicle components before it is scrapped.

The object of this invention is to overcome the disadvantages described by providing means for the attachment of a tank to the body shell of a vehicle which is economical and easy to construct and instal, and through which the tank can be removed in a short time even after the vehicle has been in use for a long period, so as to make the operation of recovering the tank before scrapping the vehicle economically viable.

To this end, a means for the attachment of a tank to the body shell of a vehicle in accordance with the present invention is characterized by the features specified in the characterizing part of Claim 1.

For a better understanding of the invention a non-restrictive description of an embodiment will now be provided with reference to the appended drawings, in which:
Figure 1 shows a view in elevation of three quarters of means for attachment of a tank to the body shell of a vehicle according to the invention, seen from below,
Figure 2 shows a view in elevation of the means of attachment illustrated in Figure 1 seen in plan from below,
Figure 3 shows a view in elevation in cross-section along a plane of the line III-III on the means of attachment illustrated in Figure 2.

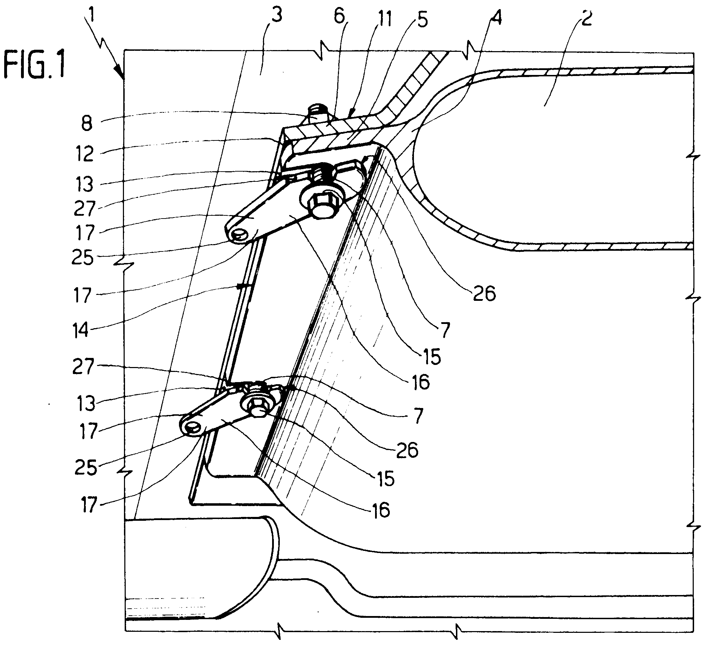

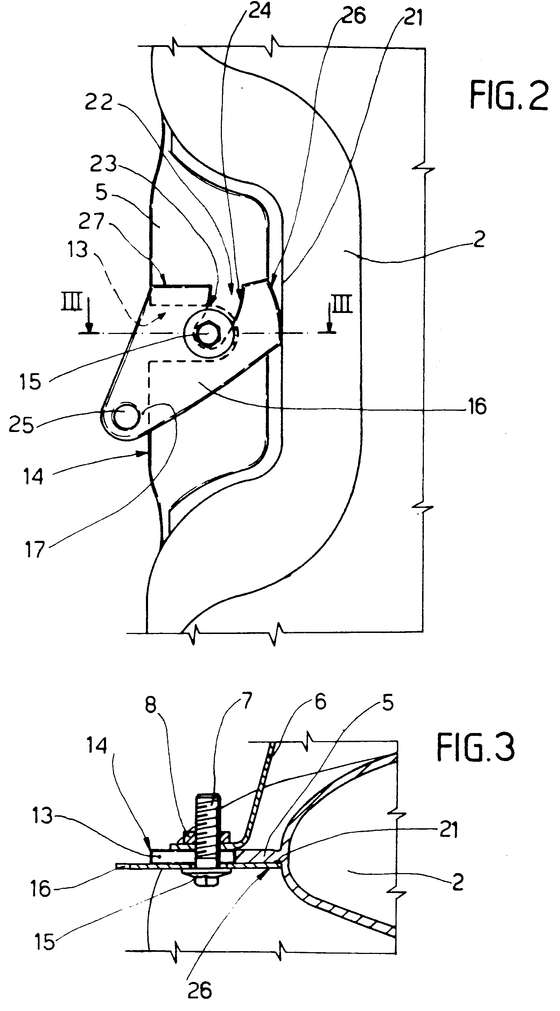

With reference to Figures 1 to 3, 1 indicates means of attachment for attaching a tank 2 to the body shell 3 of a vehicle, which is known and is not illustrated for the sake of simplicity.

According to the invention, tank 2 is provided at one end 4 with a rigid fin 5, normally of plastics material, made in a single piece with tank 2, which when in use is in contact with a bracket 6, preferably made of metal, integrally fixed to body shell 3 of the vehicle.

Fin 5 is normally integrally fixed to bracket 6 by means of bolts 7, which are screwed into nuts 8 respectively, which are preferably welded so as to project from one side 11 of bracket 6 opposite a corresponding side 12 which is in contact with fin 5.

At the points where bolts 7 are screwed up fin 5 is provided with through openings 13, preferably of a "U" shape, for housing said bolts 7. Openings 13 are made at an outer edge 14 and have minimum transverse dimensions which are larger than the maximum dimensions of the corresponding heads 15 of bolts 7, or corresponding securing washers, which are known and not illustrated in the figure for the sake of simplicity, which may be placed between heads 15 and fin 5.

In accordance with the invention tank 2 is attached to body shell 3 of the vehicle through the use of corresponding plates 16 which are located between heads 15 of bolts 7 and fin 5 integral with said tank 2.

Plates 16 are of a substantially triangular shape and a first end 17 thereof project beyond outer edge 14. This is opposite a corresponding edge 21 on tank 2 which forms the boundary between the latter and fin 5.

Plates 16 are also provided with a through notch or slot 22, bounded by corresponding lateral edges 23 and 24 which are parallel to each other, curved and open in relation to an edge 27 of corresponding plate 16 opposite end 17. The latter comprises an apex of the triangle formed by said plates 16.

Notch 22 has transverse dimensions smaller than the dimensions of head 15 of bolt 7, but sufficient to allow the shank of bolt 7 to pass through towards corresponding nut 8.

At end 17 plates 16 are provided with seizable means which are eccentric with respect to corresponding bolt 7, in the case in point a through hole 25, which when in use makes it possible for plate 16 to be engaged by a suitable tool, which is not illustrated in the figures for the sake of simplicity, and then rotated with respect to fin 5 with its centre substantially corresponding to bolt 7.

One edge 26 of plate 16 adjacent to and alongside edge 27 is in contact with tank 2. Edge 26 is curved, is convex away from the opposite part of end 17 and has its centre of curvature lying substantially in the position in which bolt 7 is threaded. In this way edge 26 is able to act together with edge 21 of tank 2 acting in the manner of a cam so as to allow plate 16 to rotate with respect to fin 5, simultaneously releasing it from the shank of bolt 7 (which acts as the centre of rotation) through the open part of notch 22 on edge 27.

Thus removal of the tank no longer requires complete removal of bolts 7 to release fin 5, a long and costly operation because of the corroded state of bolts 7, and instead all that is necessary is to engage plate 16 by means of holes 25 with an appropriate tool and cause it to rotate, exerting a torque with respect to bolts 7 by means of the tool. Rotation of plate 16 causes bolt 7 to be released from notch 22 thus releasing plate 16 itself, and also partly loosens bolts 7 which are initially caused to rotate through friction.

As soon as plates 16 have released bolts 7, these are no longer in a position to hold tank 2 as the heads 15 thereof are smaller than openings 13. Thus tank 2 falls downwards and can be recovered, while bolts 17 which are still partially screwed onto brackets 6, remain integral with the body shell.

The advantages associated with the invention are clear from what has been described. The means for attaching a tank to the body shell of a vehicle according to this invention makes it possible for the tank to be attached to the shell quickly and economically, and likewise removed equally quickly and economically, even by automated machines (because of the simplicity of the operations involved), which assists maintenance work on the vehicle when the tank is required, and also removal of the tank from the vehicle in order to recover it at the time when the vehicle is scrapped.

In accordance with a possible variant embodiment, which is not illustrated in the appended drawings, without going beyond the scope of this invention, means of attachment 1 may conveniently also comprise corresponding flexible metal strips which pass round the base of tank 2, which are provided at their corresponding ends with through holes for housing bolts 7.

In this particular case the through holes made in the ends of the metal strips and those made in fin 5 must have minimum dimensions larger than the dimensions of the heads 15 of bolts 7, while the strips must be mounted between fin 5 and corresponding plates 16.

When in use the rotation of plates 16 by means of an appropriate tool will release bolts 7 from notch 22, consequently releasing plates 16. The metal strip and fin 5 are then no longer in a position to hold tank 2 in position, as heads 15 of bolts 7 are smaller than the holes made in the metal strips and openings 13 in fin 5.

## Claims

1. Means (1) for the attachment of a tank (2) to the body shell (3) of a vehicle, of the type comprising at least one first attachment member (5) integrally fixed to the said tank (2), at least one second attachment member (6) integrally fixed to the said body shell (3), and corresponding means (7,16) for attachment of the said first member (5) to the said second member (6), **characterized** in that the said first attachment member (5) is provided with an opening (13) of predetermined size, the said means of attachment comprising at least one bolt (7) which can be screwed to the said second attachment member (6) through the said opening (13), the said bolt (7) being provided with a head (15) of maximum size smaller than the dimensions of the said opening (13); the means of attachment also includes a plate (16) located between the said first attachment member (5) and the said bolt head (15), the said plate (16) being provided with a through notch (22) in which the bolt (7) is housed, the said plate (16) being also provided with at least one eccentric seizable member (17,25) which can cause the said plate (16) to rotate with respect to the said bolt (7), the said notch (22) being shaped in such a way as to cause the said plate (16) to be released from the said bolt (7) following the said rotation of the said plate (16), the said notch (22) having transverse dimensions smaller than the dimensions of the head (15) of the said bolt (7).

2. Means (1) for the attachment of a tank (2) according to claim 1, characterised in that the said plate (16) is of a substantially triangular shape, the said notch (22) is a through notch and is bounded by corresponding curved edges (23,24) which are parallel to each other, the said notch (22) being open at one edge (27) of the said plate (16).

3. Means (1) for the attachment of a tank (2) according to claim 2, characterised in that the said eccentric seizable member comprises at least a through hole (25) positioned at one apex (17) of the said plate (16).

4. Means (1) for the attachment of a tank (2) according to claim 3, characterised in that the said plate (16) has a curved edge (26), whose corresponding convexity faces away from the said apex (17), the said edge (26) being in contact with a corresponding edge (21) of the said tank (2) and holding the said plate (16) in position with respect to the said bolt (7) and the said fin (5).

5. Means (1) for the attachment of a tank (2) according to claim 1, characterised in that the said first means of attachment integral with the said tank (2) consists of a flat rigid fin (5), preferably constructed of plastics material and made in one piece with the said tank (2), the said opening (13) in the said fin (5) being provided on an outer edge (14) of the said fin (5) and having a substantially "U" shape.

6. Means (1) for the attachment of a tank according to claim 1, characterised in that the said second means of attachment integrally fixed to the said body shell (3) comprises a fixing bracket (6), preferably made of metal, the said bracket (6) being provided with corresponding means (8) for receiving the said bolt (7).

## Patentansprüche

1. Vorrichtung (1) zum Anbringen eines Kraftstoffbehälters (2) an der Karosserie (3) eines Kraftfahrzeuges, mit wenigstens einem ersten Befestigungsmittel (5), das in den Kraftstoffbehälter (2) integriert ist, wenigstens einem zweiten Befestigungsmittel (6), das in die Karosserie (3) integriert ist, sowie zugehörigen Vorrichtungen (7, 16) zum Anbringen des ersten Mittels (5) am zweiten Mittel (6), **dadurch gekennzeichnet**, daß das erste Befestigungsmittel (5) mit einer Öffnung (13) mit vorgegebener Größe versehen ist, die Anbringungsvorrichtung wenigstens einen Bolzen (7) umfaßt, der durch die Öffnung (13) am zweiten Befestigungsmittel (6) verschraubt werden kann, der Bolzen (7) mit einem Kopf (15) versehen ist, dessen maximale Abmessung größer ist als die Abmessungen der Öffnung (13); die Anbringungsvorrichtung ferner eine Platte (16) enthalt, die zwischen dem ersten Befestigungsmittel (5) und dem Bolzenkopf (15) angeordnet ist, die Platte (16) mit einer Aussparung (22) versehen ist, die den Bolzen (7) aufnimmt, die Platte (16) ferner mit wenigsten einem exzentrischen greifbaren Element (17, 25) versehen ist, das ein Drehen der Platte (16) bezüglich des Bolzens (7) bewirken kann, die Aussparung (22) so geformt ist, daß bei der Drehung der Platte (16) die Platte (16) vom Bolzen (7) gelöst wird, und die Aussparung (22) Querabmessungen besitzt, die kleiner sind als die Abmessungen des Kopfes (15) des Bolzens (7).

2. Vorrichtung (1) zum Anbringen eines Kraftstoffbehälters (2) nach Anspruch 1, dadurch gekennzeichnet, daß die Platte (16) eine im wesentlichen dreieckige Form besitzt, die Aussparung (22) eine durchgehende Aussparung ist und von jeweils gekrümmten Kannten (23, 24) begrenzt wird, die zueinander parallel sind, und die Aussparung (22) an einer Kante (27) der Platte (16) offen ist.

3. Vorrichtung (1) zum Anbringen eines Kraftstoffbehälters (2) nach Anspruch 2, dadurch gekennzeichnet, daß das exzentrische, greifbare Element wenigstens eine Durchgangsbohrung (25) umfaßt, die an einem Scheitelpunkt (17) der Platte (16) angeordnet ist.

4. Vorrichtung (1) zum Anbringen eines Kraftstoffbehälters (2) nach Anspruch 3, dadurch gekennzeichnet, daß die Platte (16) eine gebogene Kante (26) besitzt, deren zugehörige Konvexität vom Scheitelpunkt (17) abgewandt ist, die Kante (26) mit einer entsprechenden Kante (21) des Kraftstoffbehälters (2) in Kontakt steht und die Platte (16) bezüglich des Bolzens (7) und des Steges (5) festhält.

5. Vorrichtung (1) zum Anbringen eines Kraftstoffbehälters (2) nach Anspruch 1, dadurch gekennzeichnet, daß das erste Befestigungsmittel, das in den Kraftstoffbehälter (2) integriert ist, aus einem, flachen, steifen Steg (5) besteht, der vorzugsweise mit dem Kraftstoffbehälter (2) in einem Stück aus einem Kunststoffmaterial gefertigt ist, die Öffnung (13) im Steg (5) an einer Außenkante (14) des Steges (5) vorgesehen ist und im wesentlichen eine "U"-Form besitzt.

6. Vorrichtung (1) zum Anbringen eines Kraftstoffbehälters nach Anspruch 1, dadurch gekennzeichnet, daß das zweite Befestigungsmittel, das in die Karosserie (3) integriert ist, einen Befestigungsträger (6) umfaßt, der vorzugsweise aus Metall gefertigt ist, und der Träger (6) mit entsprechenden Vorrichtungen (8) zum Aufnehmen der Bolzen (7) versehen ist.

## Revendications

1. Dispositif (1) pour la fixation d'un réservoir (2) à la carrosserie (3) d'un véhicule, du type comprenant au moins un premier élément de fixation (5) solidaire dudit réservoir (2), au moins un deuxième élément de fixation (6) solidaire de ladite carrosserie (3), et des moyens correspondants (7,16) pour fixation dudit premier élément (5) audit deuxième élément (6), caractérisé en ce que ledit premier élément de fixation (5) comporte une encoche (13) de dimension prédéterminée, lesdits moyens de fixation comprenant au moins une vis (7) qui peut être vissée dans ledit deuxième élément de fixation (6) à travers ladite encoche (13), ladite vis (7) étant pourvue d'une tête (15) dont la dimension maximale est plus petite que les dimensions de ladite encoche (13) ; les moyens de fixation comprennent également une plaque (16) placée entre ledit premier élément de fixation (5) et ladite tête de vis (15), ladite plaque (16) comportant une encoche traversante (22) dans laquelle passe la vis (7), ladite plaque (16) comportant également au moins un élément de prise excentré (17,25) qui permet de faire tourner ladite plaque (16) par rapport à ladite vis (7), ladite encoche (22) étant configurée de manière à ce que ladite plaque (16) se dégage de ladite vis (7) à la suite de ladite rotation de ladite plaque (16), ladite encoche (22) ayant des dimensions transversales plus petites que les dimensions de la tête (15) de ladite vis (7).

2. Dispositif (1) pour la fixation d'un réservoir (2) suivant la revendication 1, caractérisé en ce que ladite plaque (16) est de forme sensiblement triangulaire, ladite encoche (22) est une encoche traversante et elle est délimitée par des bords courbes correspondants (23,24) qui sont mutuellement parallèles, ladite encoche (22) étant ouverte dans un bord (27) de ladite plaque (16).

3. Dispositif (1) pour la fixation d'un réservoir (2) suivant la revendication 2, caractérisé en ce que ledit élément de prise excentré comprend au moins un trou traversant (25) situé à un sommet (17) de ladite plaque (16).

4. Dispositif (1) pour la fixation d'un réservoir (2) suivant la revendication 3, caractérisé en ce que ladite plaque (16) présente un bord courbe (26) dont la convexité correspondante est tournée à l'opposé dudit sommet (17), ledit bord (26) étant en contact avec un bord correspondant (21) dudit réservoir (2) et tenant ladite plaque (16) en position par rapport à ladite vis (7) et à ladite ailette (5).

5. Dispositif (1) pour la fixation d'un réservoir (2) suivant la revendication 1, caractérisé en ce que ledit premier élément de fixation solidaire dudit réservoir (2) consiste en une ailette rigide plate (5), de préférence fabriquée en matière plastique et formée en une seule pièce avec ledit réservoir (2), ladite encoche (13) de ladite ailette (5) étant prévue sur un bord extérieur (14) de ladite ailette (5) et étant sensiblement en forme de U.

6. Dispositif (1) pour la fixation d'un réservoir suivant la revendication 1, caractérisé en ce que le dit deuxième élément de fixation solidaire de ladite carrosserie (3) comprend un support de fixation (6), de préférence en métal, ledit support (6) étant pourvu d'un moyen correspondant (8) pour recevoir ladite vis (7).
